(19) Europäisches Patentamt
European Patent Office
Office européen des brevets

(11) EP 0 349 671 B1

(12) **EUROPÄISCHE PATENTSCHRIFT**

(45) Veröffentlichungstag und Bekanntmachung des Hinweises auf die Patenterteilung:
**31.01.1996 Patentblatt 1996/05**

(51) Int. Cl.[6]: **C02F 1/52**, C01B 17/42

(21) Anmeldenummer: **88117359.5**

(22) Anmeldetag: **19.10.1988**

(54) **Verfahren zur Abtrennung von Schwermetallen aus Abwässern durch Sulfidfällung mittels Calciumpolysulfid**

Process for separating heavy metals from waste water by sulfide precipitation using calcium polysulfide

Procédé pour la séparation de métaux lourds d'eaux usées par la précipitation de sulfide à l'aide de calcium polysulfide

(84) Benannte Vertragsstaaten:
**AT BE CH DE ES FR GB GR IT LI LU NL SE**

(30) Priorität: **07.07.1988 DE 3822922**

(43) Veröffentlichungstag der Anmeldung:
**10.01.1990 Patentblatt 1990/02**

(73) Patentinhaber: **PAN-CHEMIE Dr. J. Fülöp**
**D-50170 Kerpen-Sindorf (DE)**

(72) Erfinder: **Fülöp, Julius**
**D-5014 Kerpen-Sindorf (DE)**

(74) Vertreter: **Hartmann, Günter, Dr. Dipl.-Chem.**
**D-81679 München (DE)**

(56) Entgegenhaltungen:
**CH-A- 89 697**
**DE-A- 2 257 364**
**DE-B- 1 800 886**
**US-A- 4 329 224**
**US-A- 4 462 913**

- **CHEMIAL ABSTRACTS, Band 100, Nr. 10, 5. März 1984, Seite 217, Zusammenfassung Nr. 71879n, Seite 217, Columbus, Ohio, US; A.I. ELESIN et al.: "Some features of sulfur dissolution in milk of lime", & TSVETN. MET. 1983, (12), 12-13**
- **Toshiro Aratani et al; "The removal of heavy metal..."; Bull. chem. Soc. Japan, 51 (1978), S. 2705-2709**
- **Toshiro Aratani et al; "Continuous Removal of heavy metals..."; Bull. chem. Soc. Japan, 52 (1979), S. 218-222**
- **Römpps Chemie-Lexikon, 7. Aufl. (1972), "Calciumpolysulfide", S. 482**
- **Römpps Chemie-Lexikon, 8. Aufl. (1979), "calciumpolysulfide", S. 573**
- **D. Martinetz, "Immobilisation, Entgiftung..."2. Aufl., Verlag Harri Deutsch Thun, 1986, S. 147**
- **"Gmelin", Sept. Nr. 82, Ca, Tl.B, 1957, S. 650-655**
- **"Dechema-Monographien" 80 (1976), 1, S. 179-180**
- **Hollemann-Wiberg, "Lehrbuch d. anorg. Chemie", 81.-90. Aufl., 1976, S. 315**

Bemerkungen:
Die Akte enthält technische Angaben, die nach dem Eingang der Anmeldung eingereicht wurden und die nicht in dieser Patentschrift enthalten sind.

EP 0 349 671 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.9.7/3.4

## Beschreibung

Die Erfindung betrifft ein Verfahren zur Abtrennung von Schwermetallen aus Abwässern durch Sulfidfällung mittels Calciumpolysulfid.

Schwermetalle finden in breiten Bereichen der modernen Volkswirtschaft Verwendung. Zum Schutze vor Korrosion und zur Verschönerung werden Metalle und Kunststoffe mit Zink, Chrom, Nickel, Kupfer, Cadmium, Zinn und Silber überzogen. Zur Speicherung von Elektrizität werden Blei, Nickel, Cadmium in Batterien und Akkumulatoren in großen Mengen eingebaut. In Ruß und Schlacken nach Verbrennung von Mineralöl reichert sich Vanadin, im Prozeßwasser von Papierfabriken Seien an. Viel Quecksilber wird in Form von Amalgam in Zahnarztpraxen aber auch zur Herstellung von Thermometern und anderen Meßinstrumenten verbraucht, um nur einige Beispiele zu nennen.

Nach Erfüllung ihrer Aufgaben gelangen die Schwermetalle in den Müll und die Abwässer. Im Gegensatz zu organischen Schadstoffen können Schwermetalle, allesamt giftig, nicht durch biologischen Abbau oder Verbrennung vernichtet, d.h. in harmlose Substanzen umgewandelt werden. Sie können nur durch Zusatz geeigneter Mittel, in der chemischen Fachsprache Fällungsmittel genannt, im Wasser unlöslich gemacht und als Schlamm aus dem Wasser entfernt werden. In höheren Konzentrationen kommen Schwermetalle überwiegend in sauren Wässern vor, da diese säurelöslich sind.

Bei der Neutralisierung, d.h. durch Zugabe von Ätznatron, Ätzkali, Kalk, Salmiak, u.ä.m. zum Wasser, fallen sie zum großen Teil als Hydroxide aus; es sei denn, sie liegen komplexgebunden vor oder bilden alkalische Salze, wie Chromate, Zinkate, Stannate u.ä.m. Alle Schwermetalle können jedoch durch irgendwelche Umstände Komplexe bilden, sei es mit Phosphaten und sog. Komplexbildnern, wie EDTA und NTA, die aus Waschmitteln stammen, sei es durch Salmiak und seine Salze, die etwa aus menschlichen und tierischen Ausscheidungen ins Abwasser gelangen. Auch die Pflanzenwelt erzeugt Komplexbildner, wie z.B. Citronensäure und andere Obstsäuren und deren Salze, das Blattgrün Chlorophyll, oder die Siderophore von Bakterien.

Die alkalische, hydroxidische Fällung hat somit nachstehend aufgeführte, gravierende Nachteile.

Komplexgebundene Schwermetalle werden nicht gefällt. Bei Fällungsmittelüberschuß können einzelne Schwermetalle wieder aufgelöst werden. Auf Deponien verbracht, können basisch gefällte Schlämme etwa durch sauren Regen oder Komplexbildung irgendwelcher Art wieder in das Wasser gelangen. Nach der Fällung verbleiben - bedingt durch ihre Löslichkeit - geringe Reste im Wasser gelöst. Diese Restlöslichkeit, in der Chemie häufig als Löslichkeitsprodukt formuliert und datiert, bildet die natürliche Grenze eines jeden Fällungsprozesses. Die Löslichkeitsprodukte der Schwermetallhydroxide übersteigen in manchen Fällen z.B. bei Cadmium, die gesetzlich vorgegebenen Restwerte. Die Löslichkeitsprodukte sind auch eher als theoretische Werte zu betrachten, da diese unter idealen Bedingungen ermittelt wurden. Die in der Praxis zu behandelnden Abwässer liegen jedoch selten in idealem Zustand vor. Zumeist sind sie mit löslichen Verbindungen, wie Chloriden, Nitraten und anderen löslichen Salzen von Natrium, Kalium oder Ammonium belastet. Die Ballastsalze erhöhen in der Regel noch die Restlöslichkeit der Schwermetalle. Ferner bilden frischgefällte, hydroxidische Niederschläge etwa mit Hilfe von Ballastionen leicht hartnäckige, kolloidale Lösungen. Der Restmetallgehalt des behandelten Wasser wird somit um einen weiteren Betrag, der vom Löslichkeitsprodukt außer acht gelassen wird, erhöht. Billige Fällungsmittel, ebenfalls Verursacher der kolloidalen Auflösung, werden in der Praxis gerne im Überschuß angewandt, um die ungenügende alkalische Fällung zu verbessern. Dies wird durch behördliche Vorschriften noch begünstigt, die Restalkalitäten bis zu pH 10, offensichtlich im Hinblick auf sauren Regen, im Abwasser zulassen. Gesetzliche Auflagen für Schwermetallrestgehalte in Abwässern, von Jahr zu Jahr verschärft und allmählich auch effizienter kontrolliert, können mit alkalisch-hydroxidischer Fällung nicht mehr erfüllt werden.

Weiterhin ist bekannt, daß die sulfidische Fällung, d.h. die Abtrennung der Schwermetalle mit Schwefelwasserstoff oder löslichen Sulfiden, wie Natriumsulfid und, Ammoniumsulfid, im sauren Medium wesentlich wirksamer ist als die alkalisch-hydroxidische.

Wie groß aber der Unterschied zwischen den beiden Fällungs arten ist, verdeutlicht Tabelle 1.

| Löslichkeitsprodukte einiger Schwermetalle ($K_L$) | | | | | | | |
|---|---|---|---|---|---|---|---|
| $K_L$ [$mol^2/l^2$] | Cadmium | Blei | Kupfer | Nickel | Zink | Quecks. | Chrom |
| Hydroxide | $10^{-14}$ | $10^{-15,6}$ | $10^{-20}$ | $10^{-14}$ | $10^{-17}$ | - | $10^{-30}$ |
| Sulfide | $10^{-27}$ | $10^{-28}$ | $10^{-27}$ | $10^{-24}$ | $10^{-24}$ | $10^{-52}$ | - |

Die Differenz der Löslichkeitsprodukte liegt zwischen $10^{-7}$ und $10^{-14}$. Überschlägig umgerechnet liegen Restmetallgehalt aus Hydroxiden zehntausend bis zehnmillionen mal höher als die aus Sulfiden (in Mol/l). Hinzu kommen noch weitere, nachstehend angegebene Vorteile:

Sulfidisch können Schwermetalle auch aus ihren Komplexen gedrängt und gefällt werden. Sie können durch saure Wässer nicht wieder in Lösung gelangen, da sie aus Säure gefällt wurden.

Trotz ihrer potentiellen Vorteile und Möglichkeiten hat die sulfidische Fällung bisher keinen allgemeinen Eingang in die Technik gefunden. Hierfür sind die nachstehend angegebenen, ebenfalls gravierenden Nachteile dieses Verfahrens verantwortlich.

Schwefelwasserstoff ist gasförmig und infolge Giftigkeit und Explosionsgefahr unter gegebenen Umständen praktisch nicht zu handhaben. Lösliche Sulfide, wie Natrium-, Kalium- oder Ammonium-Sulfid, geben bei der Zudosierung zum sauer eingestellten Abwasser sehr schnell, wenn nicht sogar schlagartig, Schwefelwasserstoff frei. Somit besteht die Gefahr einer giftigen Gaswolke, wenn zu schnell dosiert oder gar überdosiert wird. Der Sicherheitsabstand ist zu gering, Fehler sind nicht zulässig. Nur durch großen apparativen Aufwand und/oder chemisch geschultes Personal läßt sich diese Gefahr mindern. Eine Forderung, die nicht realisierbar ist, wenn man bedenkt, an wieviel verschiedenen Stellen metallhaltige Abwässer in der Wirtschaft zu behandeln sind.

Um die Nachteile der sulfidischen Fällung zu vermeiden ist es bekannt organische Schwefelverbindungen zu verwenden, wie beispielsweise Xanthogenate und Trimethyltriazin, allerdings mit dem Nachteil, daß eine relativ große organische Masse eingesetzt werden muß, was bei Xanthogenaten zu einem erhöhten apparativen Aufwand (größere Filterflächen, Absatzbecken) führt. Mit Trimethyltriazin können keine dreiwertigen Schwermetalle, z.B. Chrom III, gefällt werden. Es wird in alkalischem Medium gefällt, wodurch die Gefahr der anionischen Wiederauflösung (z.B. Zink, Chrom durch Natron) sowie die der Komplexbildung (z.B. durch Ammoniak) nicht oder nur schwer zu beseitigen ist.

Alle diese bekannten Verfahren einschließlich der hydroxidischen Fällungen und Behandlungen mit Montmorillonit und anderen Tonmineralien haben den Nachteil, daß sie komplexgebundene Schwermetalle, insbesondere solche mit hohen Beständigkeitskonstanten, wie z.B. EDTA-Komplexe, die sehr häufig vorkommen, nicht oder nicht ohne zusätzlichen Aufwand an Material oder Apparatur fällen können.

Das gleiche gilt für anionisch gebundene Metalle, die entweder als solche im Abwasser vorliegen, oder durch alkalische Behandlung wieder aufgelöst werden können. Sie sind entweder amphoter, wie Zinkate, Plumbate (Blei), oder können zu höheren Oxidationsstufen oxidiert werden, wie Chromate, Vanadate, und werden dadurch alkalisch löslich. Letztere können sogar in saurem Medium Bestand haben, es sei denn, sie werden reduziert.

Ein besonders umweltrelevanter Fall ist die Chromatentgiftung etwa in den Abwässern der Automobilindustrie. Sie wird in zwei wesentlichen Verfahrensschritten durchgeführt: Reduktion mit Natriumsulfit und hydroxidischer Fällung. Bei sulfidischer Fällung im sauren Medium wird nur ein Verfahrensschritt und ein Fällungsmittel benötigt, was ein Vorteil ist, wenn Chromate allein im Abwasser vorliegen. Zunehmend werden aber Abwässer aus verschiedenen Betriebsteilen zusammengeführt, um in einer gemeinsamen Endstufe behandelt zu werden. Aus gegenseitigen Neutralisierungen, Verdünnungen und Fällungen der Wässer verschiedener Provenienz entsteht ein Sammelabwasser, das mehrere Schwermetalle kationisch, anionisch oder komplexiert enthält. Trotz Verdünnungen können Restmetallgehalte zehn- bis tausendfach höher liegen als die gesetzlich vorgeschriebenen Werte.

Wie vorstehend dargelegt, sind im heutigen Stadium der Umweltvorsorge sulfidische Mittel und Verfahren zur Schwermetallabscheidung aus Abwässern nicht mehr wegzudenken, ja sie werden volkswirtschaftlich dringend benötigt, allerdings nur mit einer in das System integrierten Sicherheitsbarriere, die die Abgabe des gefährlichen Schwefelwasserstoffes in die Atmosphäre auf ein erträgliches Maß reduziert. Lösliche Sulfide zu sauren Medien dosiert, wandeln sich sekundenschnell in Schwefelwasserstoff um, wenn sie von vorhandenen Schwermetallen nicht gefällt werden.

Schwefelwasserstoff ist giftig und explosionsgefährlich, vergleichbar mit Cyanwasserstoff. Im Gegensatz zu letztere. verrät sich dieser jedoch frühzeitig durch seinen intensiven Geruch. Durch Tabelle 2 sollen die Gefahren und das erträgliche Maß verdeutlicht werden. Die Zahlenwerte sind in ppm., d.h. in Teilen Schwefelwasserstoff pro Million Teilen Luft, angegeben.

| | |
|---|---|
| Geruchsschwelle der menschlichen Nase | 0,1 bis 0,2 |
| sehr scharfer, kaum erträglicher Geruch | 3 bis 5 |
| Schwellenwert (MAK) | 10 |
| Ernsthafte Augenverletzung (Gasauge) | 50 bis 100 |
| Geruchslähmung | 150 bis 250 |
| Lungenödem, unmittelbare Lebensgefahr | 300 bis 500 |
| sofortiger Zusammenbruch mit Atemlähmung | 1000 bis 2000 |

Wie ohne weiteres ersichtlich, liegen keine tückischen Wirkungen vor. Der Sicherheitsabstand zwischen Wahrnehmung und ernsthafter Verletzung beträgt 50/0,2 = 250(fach), wobei davon ausgegangen werden kann, daß vorher jedermann fliehen wird. Der Geruch von Schwefelwasserstoff ist unangenehm, aber nicht gefährlich.

Es gilt also zu verhindern, daß Schwefelwasserstoff plötzlich und in größeren Mengen, sozusagen schlagartig, frei wird, und zwischen Wahrnehmung und der gefährlichen Dosis keine Zeit mehr zum Fliehen verbleibt.

Bekannte sulfidische Verfahren versuchen daher auch dieses Gefahrenmoment auszuschalten, allerdings mit geringem Erfolg und zumeist mit vergleichsweise großem Aufwand.

Die DE-OS 32 45 314 beschreibt ein Verfahren, nach dem ein lösliches Sulfidprodukt im Unterschuß - gemessen an der stöchiometrisch erforderlichen Menge zur Fällung aller Schwermetalle - eingesetzt wird, um alle Sulfidionen garantiert abzuscheiden und auch um den Geruch gänzlich zu binden. Zur Kontrolle und Regelung des Prozesses wird ein Meßinstrument für Sulfid und Schwefelwasserstoff unterhalb bzw. oberhalb des Flüssigkeitsspiegels vorgeschlagen. Auch bei diesem Verfahren entsteht der unangenehme Geruch des Schwefelwasserstoffs, da die sulfidischen Fällungsmittel unterhalb des Flüssigkeitsspiegels zugesetzt werden. Dieses bekannte Verfahren erfordert eine genaue Kenntnis der Schwermetallgehalte zu jeder Zeit und damit einen sehr hohen analytischen Aufwand. In Richtung einer sicheren Verhinderung eines Schwefelwasserstoffunfalles ist aber nur ein kleiner Schritt getan. Überdosieren kann man auch bei 2/3 der Sulfidmenge, wenn etwa durch einen betrieblichen Fehlgriff das Zulaufwasser keine Schwermetalle enthält. In dieser Literaturstelle wird eine Reihe von Merkmalen der sauer bis schwach alkalischen Sulfidfällung für sich beansprucht, wie z.B. die Gruppenfällung in verschiedenen pH-Bereichen oder der Einsatt von billigen, trivialen Fällungsmitteln, wie Natriumsulfid, Ammoniumsulfid ect.

Durch die DE-OS 32 42 819 ist ein Verfahren bekannt, nach dem das komplexgebundene Schwermetall zunächst durch Zugabe eines nicht toxischen Metalls, z.B. Eisen, aus dem Komplex verdrängt und danach sulfidisch gefällt wird. Die Fällung erfolgt im alkalischen Medium, in dem fein verteilt schlecht filtrierbare Sulfidniederschläge entstehen können. Aus diesem Grunde werden Filterhilfsmittel, wie Aktivkohle und Tonmineralien, zugesetzt, die zugleich auch als Sulfid-Depot dienen sollen. Als Fällungsmittel werden lösliche Sulfide und Polysulfide genannt. Polysulfide sind aber in alkalischem Medium sehr instabil und können sich unter Abgabe von Schwefelwasserstoff schnell zersetzen.

Die DE-PS 34 33 618 gibt einen Einblick darüber, welcher apparative Aufwand erforderlich ist, um die sulfidische Fällung der Schwermetalle in einem kontinuierlichen Prozeß kontrolliert durchzuführen. Das Abwasser wird zuerst neutralisiert (hydroxidische Fällung oder Teilfällung) und danach mit einem löslichen Sulfid kontrolliert versetzt. Da keine näheren pH-Angaben gemacht werden läßt sich nicht mit Sicherheit beurteilen, ob die Gefahr eines Schwefelwasserstoffausbruches nicht mehr relevant ist.

Aus Martinetz, "Immobilisation, Entgiftung und Zerstörung von Chemikalien" (1980), zweite überarbeitete Auflage, insbesondere Seite 147, ab Absatz 5, ist ein Verfahren zur Ausfällung von Schwermetallen aus sauren Abwässern mittels hauptsächlich Calciumtetrasulfid ($CaS_4$) enthaltender Schwefelkalklösung bekannt, deren Herstellung jedoch nicht näher beschrieben ist. In dieser Druckschrift wird unter den Literaturzitaten [5.126] und [5.337] auf Yano et al., "Dechema-Monographien", Band 80 (1976), Teil 1, Seiten 179 bis 190, und auf Aratani et al., "Bull. Chem. Soc. Japan" 51 (1978), 2705; 52 (1979) 218, hingewiesen, die alle die auf Yano et al. zurückgehenden Verfahren zur Reinigung von mit Schwermetallen belastetem Industrieabwasser mit Calciumtetrasulfid betreffen. Bei diesen Verfahren erfolgt die Sulfidfällung im alkalischen Bereich unter Einleitung von Luft und Kohlendioxid.

Ausgehend von diesem Stand der Technik hat sich die Anmelderin zur Vermeidung der obengenannten Nachteile die Aufgabe gestellt, bei einem verfahren zur Abtrennung von Schwermetallen aus Abwässern die Vorteile der sulfischen Fällung in saurem Medium, nämlich der außerordentlich niedrigen Restlöslichkeiten der Schwermetallsulfide, mit den Vorteilen der erheblich geringeren Gefahr der Schwefelwasserstoffbildung und der restlosen Beseitigung der Fällungsmittelreste (Sulfidionen) zu vereinigen.

Diese Aufgabe wird erfindungsgemäß gelöst durch ein Verfahren, wie es im Patentanspruch 1 gekennzeichnet ist, mit dessen Hilfe es möglich ist, Schwermetalle aus Abwässern besonders wirkungsvoll zu entfernen im Rahmen eines großtechnisch durchführbaren Verfahrens, ohne daß die Gefahr eines unerwünschten Schwefelwasserstoff-Ausbruches besteht, und ohne daß Fällungsmittelreste im behandelten Abwasser zurückbleiben.

Bevorzugte Ausgestaltungen des erfindungsgemäßen Verfahrens ergeben sich aus den abhängigen Patentansprüchen 2 und 3.

Weitere Merkmale und Vorteile der Erfindung gehen aus der nachstehenden detaillierten Erläuterung der Erfindung hervor.

Als Fällungsmittel wird eine komplexe Mischung aus Calciumpolysulfiden mit kleinen Anteilen von Calciumsulfid, Calciumdihydrosulfid, Calciumthiosulfat und Calciumhydroxid verwendet. Diese Mischung ist im Wasser wenig löslich, etwa 3 - 4 % bezogen auf Trockensubstanz. Die systemgebundene Sicherheit gegen schlagartige Freisetzung von Schwefelwasserstoff im sauren Medium ist wie folgt gegeben:
Infolge der niedrigen Löslichkeit kann Fällungsmittel niemals in hoher Konzentration zum sauren Abwasser zudosiert werden. Selbst wenn eInmal infolge einer Fehlbedienung größere Lösungsmengen mit einem recht stark sauren Wasser, beispielsweise bis pH = 0, vermischt werden, können nur kleine Mengen Schwefelwasserstoffs in die Atmosphäre gelangen, da die Polysulfidionen in Säure stabil sind.

Die Fällung beginnt mit der Einstellung des pH-Wertes des Abwassers, welcher sich aus den optimalen Fällungsbedingungen des jeweiligen Schwermetallions (bekannt aus der analytischen Chemie) ergibt. Beispielsweise kann der pH-Wert für Quecksilber, Kupfer, Blei auf pH = 0 - 3 (Schwefelwasserstoffgruppe einschl. der Chlorid-Gruppe) und für Cadmium und Zink auf pH = 5 - 6 (Ammoniumsulfid-Gruppe) eingestellt werden.

Ist das Abwasser in seiner Zusammensetzung und sonstigen Eigenarten wohlbekannt, so können diese gleich zu Anfang berücksichtigt werden. Wenn z.B. ein saures, schwermetallhaltiges Wasser irgendwo im Betrieb anfällt, so kann das erfindungsgemäße Fällungsmittel bereits an dieser Stelle zudosiert und anschließend an die gemeinsame Neutralisationsstelle gepumpt werden, wo mehrere Abwassersorten zusammenlaufen. Diese Fahrweise kann besonders vorteilhaft für die gesamte Schwermetallentgiftung des Betriebes sein, da die einmal sulfidisch gefällten Metalle durch komplexbildende Substanzen, die evtl. aus anderen Betriebsteilen zuströmen, praktisch nicht mehr aufgelöst werden können.

Die Einstellung des optimalen pH-Wertes hängt somit von folgenden Faktoren ab; von den Schwermetallarten bzw. Gruppen, von deren Menge (Konzentration) bzw. Mengenverteilung, von deren Oxidationsstufen (z.B. ob Chrom dreioder sechswertig vorliegt), von der Anwesenheit und Art von Komplexbildnern (z.B. ob größere Mengen Ammoniumsalze wie bei Kraftwerken durch Entstickung und Entschwefelung) sowie von Phosphaten, Citraten u.ä.m. sowie von anderen chemischen, betrieblichen und wirtschaftlichen Eigenarten.

Bei einem kontinuierlichen Verfahren kann die Auslegung, d.h. die apparative, meß- und regeltechnische Gestaltung und die optimale Prozeßführung hochspezifisch von den vorgenannten Eigenarten abhängen.

Für die Vorkalkulation solcher Anlagen, für kleine Mengen Abwässer ( 0 - 10 $m^3$) und Chargenfällung, für wenig bekannte Abwässer mit kleinen Schwermetallkonzentrationen, für eine ganze Reihe dünner Abwässer ohne nennenswerte und relevante Eigenarten, wird folgenderweise gefällt:
Der pH-Wert wird auf 4 - 5, vorzugsweise auf 4,5, eingestellt, vorteilhaft mit Salzsäure. Es können aber auch andere mineralische Säuren verwendet werden. Zur gleichmäßigen Verrührung der Säure wird ein geeignetes Rührwerk, provisorisch beispielsweise auch Preßluftlanzen, eingesetzt oder aber auch die Flüssigkeit intensiv umgepumpt (zirkuliert).

In einem Vorratsbehälter wird das erfindungsgemäße Fällungsmittel in Suspension 1 : 10 mit Wasser verdünnt und verrührt. Nach kurzer Rührzeit entsteht eine homogene, gelbe Lösung mit geringem Anteil an Ungelöstem, die zugleich zum Abwasser zugegeben wird. Danach wird der Beckeninhalt solange gerührt, bis eine innige Vermischung des Fällungsmittels mit dem Abwasser erreicht ist, in der Regel ca. 10 - 20 min. Hierauf erfolgt die Neutralisation, vorteilhaft mit Kalkmilch. Anzustreben ist ein pH-Wert von 7 - 8, vorzugsweise von 7,5.

Beispielsweise wird Weißkalkhydrat 5 - 10 kg auf 100 l Wasser in einem Vorrührbehälter eingemaischt und zum Abwasser gepumpt. Auch Kalkmilch anderer Herkunft und sonstige alkalische Schlämme können zur Neutralisation verwendet werden. Nach Zugabe der erforderlichen Menge Neutralisationsmittels wird noch mäßig ca. 30 - 60 min gerührt. Bei einem pH-Wert von 7 - 8, vorzugsweise 7,5, flockt der Niederschlag aus und setzt sich ab. Das überstehende Wasser ist klar.

Zur Kontrolle werden 5 - 10 ml aus der klaren Wasserphase in ein Reagenzglas od.dgl. genommen und 1 - 2 Tropfen Methylorange Indikatorlösung zugetropft. Danach werden 3,5 %-ige Salzsäure solange zudosiert, bis die Farbe von gelb nach rot wechselt (pH 4 - 4,5). Danach werden 1 - 2 Tropfen erfindungsgemäßes Fällungsmittel zugegeben. Sollten noch Schwermetalle im klaren Wasser gelöst sein, so tritt eine deutliche, sofortige Trübung ein.

Die Ermittlung der erforderlichen Chemikalienmengen erfolgt auf ähnliche Weise. Man füllt 100 ml des zu behandelnden Abwassers in ein Becherglas und gibt 3 - 5 Tropfen Methylorange zu. Danach säuert man die Lösung mit 3,5 %-ige Salzsäure bis zum Farbumschlag (10 - 30 Tropfen Salzsäure je nach pH-Wert des Abwassers). Hierauf erfolgt die Titrierung des Wassers mit dem erfindungsgemäßen Fällungsmittel, d.h. aus einer eingeteilten Pipette wird solange Fällungsmittel in das Wasser getropft und umgerührt, bis pH 6 erreicht ist (Messung mit Pocket-pH-Meter oder Indikatorpapier). Schließlich neutralisiert man mit 0,05 - 0,1 g Kalkhydrat (eine Messerspitze voll).

Auch in diesem Fall muß als Endpunkt pH 7 - 8, vorzugsweise 7,5, eingehalten werden. Dies ist leicht erkennbar an der plötzlichen Ausflockung und Aufklarung des vorher immer trüben Wassers.

Der Bedarf errechnet sich wie folgt:

$$\text{Bedarf} = \text{Verbrauch Fällungsmittel in ml} \times 35 / 250$$
$$= \text{erfindungsgemäßes Fällungsmittel in l je } m^3 \text{ Abwasser.}$$

| | |
|---|---|
| Zahlenbeispiel: | Verbrauch 0,7 ml erfindungsgemäßes Fällungsmittel |
| | 0,7 x 35 / 250 = 0,1 l/$m^3$ |
| Säurebedarf: | Verbrauch Tropfenzahl 3,5 %-ige Säure / 100 = l Salzsäure 35 %-ig je $m^3$ Abwasser. |
| oder in Zahlen: | Verbrauch 20 Tropfen Salzsäure, 3,5 %-ig, 20/100 = 0,2 l Salzsäure 35 %-ig je $m^3$ Abwasser. |

Ebenso einfach errechnet sich der Bedarf an Kalkhydrat.
Bedarf an erfindungsgemäßem Fällungsmittel l/$m^3$ x 1,5 in Zahlen 0,1 x 1,5 = 0,15 kg Kalkhydrat je $m^3$ Abwasser.

Das vorstehende, allgemeine Beispiel zeigt, wie man mit Hilfe des erfindungsgemäßen Verfahrens auch im einfachsten Fall Schwermetalle effizient, und zwar unter Erfüllung der gesetzlichen Auflagen, abtrennen kann. Für eine große Zahl Gewerbetreibender, für Sonstige kleinere bis mittlere Abwasserproduzenten, sind sonst die Jahr für Jahr strenger werdenden gesetzlichen Auflagen nicht erfüllbar.

Beispiel I

In einer Müllverbrennungsanlage, in der große Mengen Spezialmüll (z.B. Klinikmüll) aber auch Klärschlamm, verbrannt werden, mußten Kessel, Absorber usw. rauchgasseitig gereinigt werden. Es wurden dicke, erdige Krusten von den Kesselwänden, Wärmeaustauscherrohren usw. mit Wasser abgewaschen. Krusten lösten sich im Wasser überwiegend auf unter Einstellung eines pH-Wertes von 3 - 5.

Es fielen ca. 80 m³ sauren Abwassers mit wechselnden Zusammensetzungen und pH-Werten an, je nachdem ob es sich um Wasch- oder Nachspülwasser, Wasser vom Container oder vom Absorber, handelte. Eingesammelt wurden die Wässer in sieben provisorisch aufgestellten Bassins von ca. 15 m³ Inhalt je Bassin.

Folgende repräsentativen Analysen wurden erstellt, allerdings nur repräsentativ in bezug auf die Art und Verteilung der Bestandteile, nicht aber auf die Höhe ihrer Konzentrationen.

Die Werte ergeben sich nachstehend aus Tabelle 3, wobei diese in ppm = mg/l angegeben sind:

| | | | |
|---|---|---|---|
| pH-Wert / spez. Gew. kg/l | 4,0/1,06 | 4,8/n.a. | n.a. |
| Leitfähigkeit MikroS/cm | 31.600 | | |
| Blei (Pb) | 2,5 | 2,0 | 2,0 |
| Cadmium (cd) | 250,0 | 278,0 | 161,0 |
| Zink (Zn) | 10143,0 | 11300,0 | 7600,0 |
| Quecksilber (Hg)) unter | 0,001 | n.a. | n.a. |
| Kupfer (Cu) | 213,0 | 51,0 | 26,0 |
| Nickel (Ni) | 8,3 | 4,0 | 3,0 |
| Chrom (Cr-gesamt) | 0,5 | n.a. | n.a. |
| Natrium (Na) | n.a. | 14780,0 | 7890,0 |
| Kalium (K) | n.a. | 6000,0 | 2700,0 |
| Calcium/Magnesium (Ca/Mg) | n.a. | 680/1510 | 430/1070 |
| Ammonium ($NH_4$) | n.a. | 450,0 | 180,0 |
| Sulfat ($SO_4$) | n.a. | 85620,0 | 35740 |
| Chlorid (Cl) | n.a. | 3850,0 | 1650 |
| Phosphat ($PO_4$) | n.a. | 610,0 | 320,0 |

Für jedes Bassin wurde der Bedarf an erfindungsgemäßem Fällungsmittel nach der Schnellbestimmung, wie vorstehend bereits beschrieben, ermittelt und die Wassermenge gemessen (11 - 14 m³ je Bassin).

Die benötigte Menge an erfindungsgemäßem Fällungsmittel (zwischen 1,5 - 11,5 l/m³ Abwasser je nach Bassin) wurde dann in 30 - 100 l Wasser vorgelöst und die Lösung unter Rührung des gesamten Bassininhaltes zu großer Wassermenge zugepumpt.

Danach wurde eine Stunde lang kraftvoll gerührt, wobei sich pH-Werte um 5 einpendelten. Veränderte sich der pH-Wert nicht weiter, wurde mit Kalkmilch neutralisiert (pH 7,5 angestrebt, jedoch zumeist überschritten). Der Verbauch an Kalkhydrat lag zwischen 30 und 100 kg je Bass. (2,5 - 8,5 kg/m³ ).

Nach einer weiteren Rührzeit von 1,5 - 2 h konnte die Rührung eingestellt werden (der Erfolg der Fällung wurde durch den vorerwähnten schnellen Nachweis und mit Zink- und Cadmium-Stäbchen verfolgt und überwacht).

Der Schlamm setzte sich in ca. 30 min bereits ab und verdichtete sich nach einer Stunde soweit, daß das überstehende, klare Wasser abgepumpt (dekantiert) und der Dünnschlamm über eine mobile Kammerfilterpresse filtriert werden konnte.

Vom Dakantat und Filtrat jedes Bassins wurden Proben gezogen, Restschwermetallgehalte durch AAS bestimmt (Atom-Absorptions-Spektroskopie) und danach für die Ablassung zur öffentlichen Kanalisation freigegeben.

Aus Tabelle 4 sind die Analysenergebnisse in mg/l ersichtlich:

| Kessel/Container | pH-Wert | Pb | Cd | Zn | Cu | Ni | Cr |
|---|---|---|---|---|---|---|---|
| 1 | 9,0 | 0,2 | 0,1 | 0,1 | 0,1 | 0,6 | n.n |
| 2 | 8,9 | 0,9 | 0,1 | 0,6 | 0,1 | 0,7 | n.n |
| 3 | 10,6 | 1,2 | n.n | 0,1 | n.n | 0,2 | n.n |
| 4 | 10,3 | 0,7 | n.n | 0,1 | n.n | 0,2 | n.n |
| Absorber | | | | | | | |
| 1 | 7,3 | 0,9 | 0,1 | 0,2 | 0,1 | 0,8 | n.n |
| 2 | 8,9 | 0,3 | n.n | 0,2 | n.n | 0,5 | 0,1 |
| Grenzwerte (gesetzl. festgelegt) | 6-11,0 | 2,0 | 0,5 | 2,0 | 1,0 | 2,0 | 2,0 |
| n.n mit AAS nicht nachweisbar | | | | | | | |

Beispiel II

In dem Passivierungsbetrieb von Automobilwerken fallen ständig chromhaltige Abwässer an, die das sechswertige Chrom in verschiedenen Konzentrationen enthalten (Chromatierung). Bekanntlich kann das Chromat mit üblichen Fällungsmittel nicht entfernt und das Wasser muß einer Sonderbehandlung unterzogen werden (Chromatentgiftung durch Sulfitbehandlung). Mit dem erfindungsgemäß verwendeten Fällungsmittel erfolgt die Abtrennung des sechswertigen Chroms in einem Schritt. Drei solche Abwässer, zuvor mit üblichen Mitteln gereinigt, neutralisiert und filtriert, wurden mit dem Fällungsmittel wie folgt angegeben, nachbehandelt:

Der pH-Wert wurde mit Salzsäure auf ca. 3 eingestellt. Die auf die vorstehend angegebene Weise ermittelte Menge an Fällungsmittel zudosiert und 5 - 10 min gerührt. Der pH-Wert wurde durch Zugabe von Kalkmilch auf ca. 7,5 wieder eingestellt, bei ca. 15 min Rühren. Nach Abstellung des Rührwerkes setzte sich der Niederschlag in ca. 10 min ab. Nach insgesamt 30 min Standzeit wurde klares Wasser dekantiert und der Restschlamm ohne Schwierigkeiten filtriert.

Aus Tabelle 5 sind die Dosierungen sowie die Chromgehalte vor und nach der Behandlung ersichtlich:

| Abwasser Nr. | 1 | 2 | 3 |
|---|---|---|---|
| Chrom vor Bh. | 2 | 6,8 | 51,8 |
| mg/l nach Bh. | < 0,02 | < 0,02 | < 0,02 |
| Fällungsmittel kg/m$^3$ | 0,1 | 0,4 | 1,0 |
| Salzsäure 33%ig kg/m$^3$ | 1,7 | 2,0 | 2,5 |
| Weißkalkhydrat kg/m$^3$ | 2,0 | 2,5 | 3,0 |

Die Chrombestimmung erfolgte photometrisch mit Diphenylcarbazid in einem routinierten analytischen Labor. Die Nachweisgrenze für diese Methode liegt bei 0,02 mg/l Chrom. Die Proben wurden danach auch einer AAS-Bestimmung zugeführt.

Ergebnis für alle drei behandelten Proben: nicht nachweisbar.

Beispiel III

In einem großen Panzerreparatur- und -Instandsetzungsbetrieb traten Schwierigkeiten mit Cadmium im Abwasser auf. Die Panzer werden gegen Korrosion cadmiert und zu diesem Zweck wird im Werk eine Galvanisation betrieben. Ferner werden die Panzer auf einem waschplatz mit alkalischen Reinigern routinemässig gewaschen. Das Abwasser

enthält somit, obwohl in einem werkseigenen Klärwerk behandelt, stets kleine Mengen Cadmiums, die sich im Klärschlamm des zuständigen kommunalen Klärwerks ansammeln.

Die zuständige Wasserbehörde stellte eine Langzeituntersuchung (2 Monate) an; es wurden zahlreiche Proben gezogen und in einem hochleistungsfähigen AAS-Gerät im Mikrogramm-Bereich analysiert. Die in der nachfolgenden Tabelle 6 angegebenen Zahlenwerte wurden ermittelt:

Cadmium in µg/l

| | |
|---|---|
| Galvanisation nach Cyanidentgiftung | 2100 |
| Panzerwaschplatz | 50 bis 160 |
| Werkseigene Klärung (Auslauf) (nur ein Teilstrom wird geklärt) | 5 bis 64 |
| Gesamtzulauf zum kom. Klärwerk | |
| 74 Einzelmessungen (ca. 56%) | 1 bis 10 |
| 32 " | 11 bis 50 |
| 17 " | 51 bis 100 |
| 9 " | 101 bis 850 |
| Rohschlamm im kommunalen Sammler | |
| 44 Einzelmessungen | 310 bis 340 mg Cd / kg Trockenschlamm. |

Von der Untersuchungsbehörde wird angenommen, daß nur ein Teil des Cadmiums wirklich im Wasser gelöst, der andere Teil als schwebender Schlamm (Resttrübe) in den kommunalen Sammler gelangt. Dieses steht im Einklang mit der Erfahrung daß hydroxidische Schlämme - im Gegensatz zur sulfidischenschwer abzusetzen bzw. zu filtern sind. Das werkseigene Klärwerk arbeitet nach folgendem Schema:

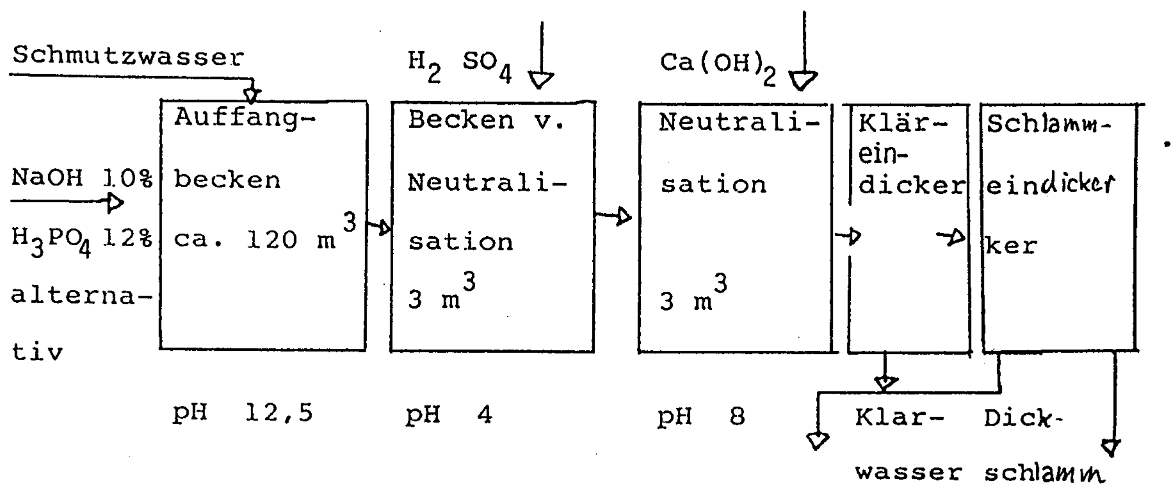


Aus dem Fließbild ist erkenntlich, daß man sich bemüht, durch Alternativdosierung von Ätznatron und Phosphorsäure einen pH-Wert von 12,5 einzustellen und zu halten, um gleich hinterher durch Schwefelsäurezugabe auf pH 4 zu kommen. Im Sinne der Schwermetallfällung ist dies einem unnützen Chemikalienverbrauch und einer Erhöhung des Salzballastes des Wassers gleichzusetzen.

Proben wurden aus Auffangbecken, Vorneutralisationsbecken und Kläreindickerüberlauf entsprechend der eingangs beschriebenen Methode untersucht.

Nach Bilanzrechnungen ergab sich ein Fällungsmittel-Bedarf von 0,28 $l/m^3$ Abwasser. Ort der Zudosierung ist das Becken vor Neutralisation. Ohne apparative Änderung, jedoch unter Weglassung von Ätznatron und Phosphorsäure, wird erreicht, daß Cadmiumspitzen und -stöße ausbleiben, der Restcadmiumgehalt unterhalb der Nachweisgrenze der Standard-AAS (ca. 50 µg/l) gedrückt wird, und durch Gewinnung eines kompakten Fällungsmittelniederschlages auch durch Schwebestoffe kein Cadmium mehr hinübergetragen wird.

Vorerwähnte Beispiele beruhen nicht auf konstruierten Laborexperimenten, sondern diese entstammen der Praxis. Die in den Beispielen angegebenen Abwässer enthielten nicht nur Schwermetalle in Art und Menge reichlich variiert, sondern auch Ballastsalze, wie Natrium, Kalium, Ammonium, Chlorid, Sulfat, Nitrat und Reinigungsmittelreste mit anionischen, kationischen Tensiden, mit Phosphaten, Citraten, Glukonaten und - besonders wichtig - mit EDTA/NTA Komplexbildnern.

Alle diese Substanzen u.a.m. behindern (inhibieren) die hydroxidische Fällung. Andererseits bildet EDTA sehr stabile Komplexe, so daß die Komplexbildung bereits mit der sulfidischen Fällungsreaktion durch lösliche Sulfide, wie Natriumsulfid, zu konkurrieren vermag. Weder bei den genannten, noch bei anderen, vor Ort oder nur im Labor mit dem erfindungsgemäßen Fällungsmittel behandelten betrieblichen Abwässern traten Zeichen dafür auf, daß die Abtrennung der jeweiligen Schwermetalle in irgendeiner Art inhibiert worden wäre. Dieser indirekte Nachweis wird noch durch die Fremdkontrolle unterstrichen. Die behandelten Abwässer wurden erst nach Bestimmung der Restgehalte im amtlichen Auftrag für die Ablassung in die Kanalisation freigegeben.

Die Gründe für den geringen Einfluß von EDTA auf die Fällung mit dem Fällungsmittel bereits bei pH 4 dürften darin liegen, daß die außerordentlich schnelle Sulfidfällung das Gleichgewicht zwischen EDTA-Komplex und Schwermetallen ständig und wirksam stört, daß die mit dem Fällungsmittel zudosierten Calciumionen freie EDTA-Plätze zumindestens zum Teil belegen, daß die im Zuge der Neutralisation mit Kalkmilch massig angebotenen Calciumionen die Verdrängung der Schwermetalle aus EDTA-Komplexen vollenden.

Wenn auch heutzutage in betrieblichen und kommunalen Abwässern mit der Anwesenheit von EDTA generell gerechnet werden muß, so wird EDTA in den meisten Fällen in geringer Konzentration (z.B. unter 100 mg/l) vorhanden sein. Andererseits geht die Wasserlöslichkeit von EDTA durch Herabsetzung des pH-Wertes auf 3 sehr stark zurück, ein Zeichen dafür, daß die Protonierung der Liganden bereits bei pH 4 - 3 erheblich fortgeschritten und die Ausbildung des Komplexes mit den zweiwertigen Schwermetallen erheblich gestört und behindert ist. Für diese grundlegende Veränderung des EDTA-Verhaltens in o.g. pH-Bereich spricht auch die starke pH-Abhängigkeit der Verdrängungsreihe:
pH 3 - 5 Fe(III) - Cr - Cu - Ni - Zn - Co
pH 5 - 7 Ni - Cu - Fe(III) - Co - Zn - Cd - Ca -
Gegensätzlich verhält sich die Löslichkeit der Sulfide (am Beispiel von Zink und Nickel ca. - Werte in mg/l).

| | pH 3 | pH 5 | pH 7 |
|---|---|---|---|
| Zn | 0,7 | 0,008 | 0,001 |
| Ni | 20,0 | 0,3 | 0,004 |

Das Beispiel des besonders stabilen und gefürchteten Nickel-EDTA-Komplexes zeigt, daß das erfindungsgemäße Mittel und Verfahren zumindest potentielle, ausbaufähige Möglichkeiten bietet, auch in schwierigsten Fällen der Schwermetallabtrennung praxisgerechte Lösungen zu finden.

Der Ni-EDTA-Komplex büßt seine Stabilität bei niedrigen pH-Werten ein; Ni-Ionen werden freigesetzt.

Bei Erhöhung des pH-Wertes auf 5 - 7 nimmt zwar die Ni-EDTA-Stabilität wieder zu, jedoch unter dem starken Konkurrenzdruck der sulfidischen Fällung. Zugleich werden Calcium-Ionen massig angeboten. Calcium im Bereich pH 5 - 7 ist durchaus mit EDTA komplexfähig (Calcium-Aufnahme von 20 - 50 mg $Ca^{2+}$ /g EDTA). Im System $Ni^{2+}$- $S^{2-}$ - $Ca^{2+}$ -EDTA entstehen Pseudogleichgewichte zu Ungunsten des Ni-EDTA-Komplexes.

Mit dem erfindungsgemäßen Verfahren werden nicht nur Kationen, sondern auch eine Reihe anionischer Verunreinigungen im Wasser beseitigt, wenn auch letztere nicht im gesetzlich vorgeschriebenen Maße. Die Behandlung kommt einer generellen Reinigung des Wassers oder.- je nach Sorte - einer intensiven Vorreinigung gleich.

Cyanid und Sulfit werden in die wesentlich harmloseren Substanzen Rodanid bzw. Thiosulfat umgewandelt.

$$H_2 S_n + (n-1)\, CN^- \rightarrow H_2S + (n-1)\, SCN^-$$

$$H_2 S_n + (n-1)\, SO_3^{2-} \rightarrow H_2S + (n-1)\, S_2 O_3^{2-}$$

Nitrit, Nitrat, Chromat-Bichromat, Chlorat/Perchlorat, Iodat, Bromat (auch Iodid), Peroxid, Perborat, Vanadat, Wolframat, Molybdat, Persulfat u.ä.m. werden reduziert (und sinngemäß auch gefällt).

Fluorid, Carbonat, Silikat, Tetraborat, Arsenit und Arsenat, Phosphat, Sulfit, Sulfat, Selenat, Tellurat, Citrat, Tartrat, Oxalat u.ä.m. werden gefällt.

Auch Seifenreste, anionische Tensidstoffe, Fettsäuren u.ä. Substanzen werden wasserunlöslich gemacht und dadurch eine evtl. vorliegende Emulsion wenigstens zum Teil gespalten. Damit werden Öle und kolloidal gelöste Substanzen aus der Wasserphase gedrängt.

Die Befreiung des Wassers von Ballaststoffen in gelöstem und emulgiertem Zustand hat große Vorteile, insbesondere auch für die Schwermetallfällung.

Durch Verringerung der Ionenstärke wird die Sulfidfällung effizienter; sie kommt näher zu den idealen Bedingungen, unter denen die Literaturwerte für Restlöslichkeiten ermittelt wurden.

Durch die erheblich verringerte Ionenkonzentratlon und die Ausschaltung von Schutzkolloiden wird die Ausflockung der gefällten Sulfide erleichtert, so daß im pH-Bereich von 6,5 - 8,5, insbesondere zwischen 7 und 8, eine klare Wasserphase und ein gut filtrierbarer Niederschlag entstehen.

Die Ansäuerung (durch Salzsäure) des Abwassers, das in den meisten Fällen ein komplexes System von gelösten Stoffen darstellt und die Behandlung mit dem reaktionsfreudigen Calciumpolysulfid im erfindungsgemäß verwendeten Fällungsmittel löst eine Reihe von Reaktionen und sonstigen Vorgängen aus, an deren Ende ein klares Wasser mit den vorgeschriebenen Restmetallgehalten und ein definierter Schlamm stehen,

Nicht alle diese Vorgänge sind z.Zt. erklärlich oder können infolge der Verschiedenheit der Abwässer beschrieben werden. Der große Teil dieser Vorgänge geht unter Verbrauch von Sulfidionen vor sich.

Nach der Zugabe des erfindungsgemäßen Fällungsmittels zu mäßig salzsauren Lösungen werden Polysulfide nicht schlagartig in Schwefelwasserstoff und Schwefel zersetzt. Aus der Polysulfidchemie ist es bekannt, daß die Polysulfide (Sulfane) in Salzsäure metastabile Emulsionen bilden. Je geringer die Säurekonzentration, umso kleiner ist die Stabilität. Die kolloidalen, metastabilen Lösungen werden in Gegenwart von $CaCl_2$ eher stabilisiert. Schwermetallionen wirken einerseits als Katalysatoren für die Beseitigung des metastabilen Gleichgewichts, andererseits als Sulfidverbraucher bei ihrer Fällung. Auch andere Sulfidverbraucher initiieren die Zersetzung, wie vorstehend bereits ausgeführt. Diese Reaktionen sind zu analytischen Bestimmungen ausgearbeitet worden, ebenso wie die Reaktion von Quecksilber mit Trisulfan, die allerdings in trockenem $CCl_4$ quantitativ verläuft.

$$H_2S_3 + Hg \rightarrow H_2S + 2\ HgS$$

Ein möglicher Weg der langsamen, kontrollierten Zersetzung ist aus der Alterung von Sulfid/Polysulfidlösungen her bekannt, die im wesentlichen durch Disproportionierung zu immer höheren Homologen und schließlich in Wochen und Monaten zu elementarem Schwefel gelangt:

$$2\ H_2S_3 \rightarrow H_2S_2 + H_2S_4$$

$$H_2S_2 \rightarrow H_2S + S_{nasc.}$$

$$H_2S_4 + 2\ S_{nasc.} \rightarrow H_2S_6$$

Die Disproportionierung von Schwefel in Kalkhydrat-Lösung verläuft bei 60 - 80 °C unter Aufbrechen des $S_8$ -Ringes nach

$$8\ S^o \rightarrow 6\ S^{2-} + 2\ S^{6+} \rightarrow 4\ S^{2-}\ 2\ S_2O_3^{2-}$$

Es ist auch bekannt, daß Schwermetallpolysulfide sich nur bei Überschuß von Sulfanen und unter besonderen Bedingungen bilden, wie bespielsweise $NiS_3$ und $CuS_3$ aus Essigsäure $ZnS_3$ in $CS_2$ -Lösung von ZnEthylat oder $PbS_3$ aus Bleibutylmercaptid in Benzol gelöst.

Ebenso ist bekannt, daß das Thiosulfat-Ion sich über Polysulfide zu Sulfid und Sulfat oder zu Schwefel und Sulfat zersetzt.

Durch NMR-Analysen hat man festgestellt, daß bei der Protonierung von $Na_2S_x$ (x = 1 bis 5) $H_2S_4$ immer vorherrscht und $H_2S_2$ praktisch nicht vorkommt. Beispielsweise ergibt $Na_2S_4$ folgende Zusammensetzung der Sulfane:
$H_2S_2$ 0%, $H_2S_3$ 18%, $H_2S_4$ 33%, $H_2S_5$ 17%, $H_2S_n$ (n = 6)32%.

Auch bei Calciumpolysulfiden spielt der verhältnismäßig stabile Tetrasulfid eine dominante Rolle, mehr oder weniger unabhängig vom Verhältnis S/Ca = 1 bis 5, wie man es von früheren Erfahrungen kennt.

Im übrigen ist die Verteilung der Sulfane abhängig von der Säuresorte (HCl, $H_2SO_4$, $H_3PO_4$), von der Temperatur, von den Kationen ($Na^+$ oder $K^+$ ) und anderen Umständen der Protonierung. Alle Lösungen enthalten $OH^-$, $HS^-$, $S_4^{2-}$ und $S_5^{2-}$ , während niedere Sulfane ($H_2S$ u. $H_2S_2$ ) auch in ionischer Form sehr gering bleiben.

Trotz geringer Konzentration der niederen Sulfane bzw. Sulfidionen verhält sich das Fällungsmittel-Salzsäure-Gemisch in der Fällungsreaktion, als bestünde es aus löslichem Monosulfid, wie nachfolgender Versuch zeigt:

12,5 g Zn $Cl_2$ (wasserfrei) wurde in 100 ml dest. Wasser aufgelöst (pH = 6). Hiervon wurden 20 ml entnommen und mit 80 ml Wasser versetzt. Der pH-Wert dieser Lösung wurde dann mit 3%-iger Salzsäure auf 4 gebracht.

Die Zinklösung wurde danach mit dem erfindungsgemäß verwendeten Fällungsmittel (3%-ige Lösung in Wasser, Atomverhältnis Ca:S=1:1, Gehalt entsprechend 2,8 % CaS) titriert. Die Titration erfolgte unter Rührung und Erwärmung auf 50 °C sowie Messung des pH-Wertes.

Portionsweise wurde die Fällungsmittel-Meßlösung zudosiert, bis bei pH 6,5 keine Fällung mehr festgestellt werden konnte. Schließlich wurde der pH-Wert auf 7,5 durch Zugabe von 2 % NaOH eingestellt und der Niederschlag absitzen gelassen. In der überstehenden Lösung konnte weder Zink (Dithizon) noch Sulfid, (Silbernitrat) nachgewiesen werden. Der Verbrauch betrug 55 ml Fällungsmittel.

Berechnung:

$$ZnCl_2\text{ - Mole} = 12{,}5 \times 0{,}2/136{,}3 = 0{,}0183$$

$$CaS\text{ - Mole} = 55 \times 0{,}028/72 = 0{,}0214$$

$$0{,}0183/0{,}0214 = 0{,}855$$

Über 85 % des zudosierten Schwefels liegt als Zinkmonosulfid vor.

Das metastabile Polysulfan-System in saurer, kolloidaler Lösung zersetzt sich verhältnismäßig langsam. Es ist vielseitig reaktionsfähig und seine Reaktionen erfolgen im Sinne des Massenwirkungsgesetzes, nach Art und Menge der jeweiligen Reaktionspartner im vorliegenden Abwasser. Wird Sulfid benötigt und verbraucht, so verschiebt sich das Gleichgewicht in Richtung Sulfidproduktion. Ist aber kein Sulfidverbraucher vorhanden, so verändert sich die Richtung der Reaktion zur Erzeugung von immer höheren Sulfanhomologen und schließlich zum elementaren Schwefel, der sich zusammen mit dem übrigen Niederschlag im Abwasser absetzt. Die Depotwirkung und die Ausscheidung als wasserunlösliche Bodenkörper verringert das Risiko der Überdosierung, somit die Freisetzung von giftigem Schwefelwasserstoff, wie auch den Verbleib der Sulfidionen im Wasser. Dieses Risiko muß bei der Fällung mit löslichen Sulfiden mit erheblichem Aufwand an Apparaten, Kontroll- und Regelinstrumenten oder sonstigen Hilfsmitteln erst beseitigt werden.

Die Herstellung des erfindungsgemäß verwendeten Fällungsmittels kann beispielsweise wie folgt durchgeführt werden:

Beispiel IV

23 kg Weißkalkhydrat und 10 kg Mahlschwefel wurden mit ca. 90 l Wasser vermengt und das Gemisch mit einem schnellaufenden Rührwerk unter Aufheizung auf 80 °C gerührt. Nach einer halben Stunde, während die Temperatur auf 50 °C gestiegen ist, entstand eine homogene, citronengelbe Suspension, die sich nur sehr langsam absetzte. Hei ca. 65 °C setzte eine stärkere Reaktion ein, erkennbar an der Verdunkelung der Farbe ins Tieforange und an der Beschleunigung der Aufheizung. Nach einer Rührzeit von insgesamt 1 h ist die Temperatur bis 80 °C gestiegen, unter weiterer Vertiefung der Farbe ins dunkle Zinnober. Daraufhin wurden Rührung und Heizung abgestellt.

Es entstand ca. 115 kg/Produkt, eine Suspension mit dem spez. Gew. von 1,15 kg/l und einem pH-Wert von ca. 13,0, Wirkstoffgehalt ca. 23 %.

Beispiel V

70 kg Weißkalkhydrat und 35 kg Schwefelpulver wurden in einer Knetmaschine vorgelegt und mit 125 l heißem Wasser (65 °C) versetzt. 5 min nach Einschaltung der Knetmaschine (langsames Rühren und Kneten) entstand bereits eine gelbe Suspension von breiiger und cremiger Konsistenz. Daraufhin wurden weitere 65 kg Weißkalkhydrat und 20 kg Schwefelpulver zugesetzt und unter Beheizung bei 60 - 50 Grad C noch 3 h gerührt und geknetet. 250 kg orangefarbene Suspension, die sich in mehreren Stunden allmählich absetzte, wurde noch homogen in Deckelfässer aus PE abgefüllt und, ohne die Deckel fest zu verschließen, gelagert. Nach einer Lagerzeit von 7 Monaten konnte der abgesetzte Schlamm mit der orangenen Flüssigkeit leicht verrührt und pumpfähig gemacht werden. Allerdings bildeten sich rötliche, nadelförmige Kristalle, die sich in Wasser opaleszierend auflösten.

Beispiel VI

250 kg gelöschter Baukalk in Pulverform wurde mit 900 l Wasser vermischt und das Ganze auf 40 °C erwärmt. Unter Rührung dosierte man 100 kg pulverförmigen Schwefel dazu, der bereits erheblich verklumpt war. Während die Dosierung nach 1 h beendet war, rührte man ca. 4 h lang weiter, bis die Temperatur 65 °C erreicht hatte. Ein Blattrührwerk lief mit ca. 40 Upm. Die Abfüllung erfolgte mit einer kleinen Pumpe der Leistung ca. 2,0 $m^3$/h über eine Leitung NW 35.

Beispiel VII

26,5 kg Weißkalkhydrat und 16,5 kg Mahlschwefel wurden mit 110 l Wasser versetzt und das Gemisch bei 90 - 95 °C und mit ca. 150 Upm. gerührt. Nach 15 min wurde das Gemisch vollkommen homogen und von kräftig orangener Farbe. Danach rührte man noch 30 min bei 80 - 85 °C. Nach Abkühlung entstanden 125 kg einer braunen, festen Masse, die sich allerdings beim Anstechen und Anrühren als thixotropisch und somit rühr- und pumpfähig erwies.

## Patentansprüche

**1.** Verfahren zur Abtrennung von Schwermetallen aus Abwässern durch Sulfidfällung mittels Calciumpolysulfid, dadurch **gekennzeichnet,** daß

a) als Calciumpolysulfid-Fällungsmittel eine komplexe Mischung von Calciumpolysulfiden mit geringen Anteilen von Calciumsulfid, Calciumdihydrosulfid, Calciumthiosulfat und Calciumhydroxid mit einem Atomverhältnis S:Ca von (0,8 bis 1,5):1 verwendet wird, die durch Umsetzung von elementarem Schwefel mit Calciumhydroxid und/oder Calciumsulfid bei einer Temperatur von 60 bis 80°C unter Rühren in wäßriger Suspension mit einem Feststoffanteil von 30 bis 60 Gew.-% hergestellt worden ist,

b) zur Durchführung der Sulfidfällung das schwermetallhaltige Abwasser erforderlichenfalls auf pH 0 bis 6 angesäuert und dann mit dem Sulfid-Fällungsmittel gemäß Abschnitt (a) in einer zur Fällung der Schwermetalle als Schwermetallsulfide ausreichenden Menge versetzt wird, wonach der pH-Wert mit Kalkmilch auf 7,0 bis 8,0 eingestellt wird, und

c) das ausflockende Schwermetallsulfid 15 bis 60 min lang absitzen gelassen wird unter Ausbildung eines Dünnschlammes, der nach dem Dekantieren der überstehenden Flüssigkeit und nach dem Filtrieren durch ein Quantitativ-Filterpapier oder unter Verwendung einer Kammerfilterpresse zu einem die Schwermetall$ulfide enthaltenden Dickschlamm verdichtet und abgezogen wird.

**2.** Verfahren nach Anspruch 1, dadurch gekennzeichnet, daß das in der Stufe (a) als Suspension anfallende Calciumpolysulfid-Fällungsmittel vor Durchführung der Stufe (b) mit Wasser im Verhältnis 1:10 verdünnt und verrührt wird.

**3.** Verfahren nach Anspruch 1 oder 2, dadurch gekennzeichnet, daß
zur Herstellung des Calciumpolysulfid-Fällungsmittels in der Stufe (a) als Schwefelquelle gemahlener Schwefel, gefällter oder durch sonstige chemische Verfahren gewonnener Schwefel, Natrium- und Kaliumpolysulfide und gealterte Sulfidverbindungen verwendet werden.

## Claims

**1.** A process for separating heavy metals from sewages by sulfide precipitation using calcium polysulfide, characterized in that

a) a complex mixture of calcium polysulfides and low proportions of calcium sulfide, calcium dihydrosulfide, calcium thiosulfate and calcium hydroxide having a S:Ca atom ratio of (0.8 to 1.5):1 is used as a calcium polysulfide precipitant, the complex mixture being prepared by reacting elemental sulfur with calcium hydroxide and/or calcium sulfide at a temperature of from 60 to 80°C while stirring in a aqueous suspension having a solid content of from 30 to 60 percent by weight,

b) for carrying out the sulfide precipitation the heavy metal-containing sewage is acidified to pH 0 to 6, if necessary, and then the sulfide precipitant according to step (a) is added in an amount sufficient to carry out the precipitation of the heavy metals as heavy metal sulfides, whereupon the pH is adjusted to a value of 7.0 to 8.0 by adding lime-milk, and

c) the flocculating heavy metal sulfide is allowed to deposit for 15 to 60 minutes to form a thin sludge which after decantation of the supernatant fluid and after filtration through a quantitative filter paper or by using a chamber filterpress is densified to a thick sludge containing the heavy metals and discharged.

**2.** The process according to claim 1, characterized in that the calcium polysulfide precipitant obtained in step (a) in form of a suspension is diluted with water in a ratio of 1:10 and agitated before carrying out step (b).

3. The process according to claim 1 or 2, characterized in that for preparing the calcium polysulfide precipitant in step (a) ground sulfur, precipitated sulfur or sulfur obtained by any other chemical processes, sodium polysulfides and potassium polysulfides and aged sulfide compounds are used as a source of sulfur.

## Revendications

1. Procédé pour séparer des métaux lourds à partir des eaux usées par précipitation de sulfure à l'aide d'un polysulfure de calcium, caractérisé en ce que

   a) on utilise comme précipitant en polysulfure de calcium un mélange complexe de polysulfures de calcium et des proportions faibles de sulfure de calcium, de dihydrosulfure de calcium, de thiosulfate de calcium et d'hydroxyde de calcium, le mélange ayant un rapport atomique S:Ca de (0,8 à 1,5):1, préparé par réaction de soufre élémentaire avec de l'hydroxyde de calcium et/ou de sulfure de calcium à une température entre 60 et 80°C en agitant en suspension aqueuse ayant une proportion de matière solide entre 30 et 60% en poids,

   b) pour la réalisation de la précipitation de sulfure, les eaux usées contenant des métaux lourds sont acidifiées, si nécessaire, à un pH entre 0 et 6 et puis mélangées avec le précipitant selon (a) dans une quantité suffisante pour la précipitation des métaux lourds en tant que sulfures de métaux lourds, après quoi le pH est ajusté à une valeur entre 7,0 et 8,0 à l'aide de lait de chaux, et

   c) on laisse se déposer le sulfure de métaux lourds floculant pendant 15 à 60 minutes, pour former une boue mince qui, après décantation du liquide surnageant et après filtration par un papier filtre quantifié ou en utilisant une presse-filtre à chambre, est concentré en une boue épaisse contenant les sulfures de métaux lourds qui est alors évacuée.

2. Procédé selon la revendication 1, caractérisé en ce que le précipitant en polysulfure de calcium obtenu en forme d'une suspension dans l'étape (a) est dilué à l'eau dans une proportion 1:10 et agité avant la réalisation de l'étape (a).

3. Procédé selon la revendication 1 ou 2, caractérisé en ce que pour la préparation du précipitant en polysulfure de calcium dans l'étape (a), on utilise en tant que source de soufre du soufre moulu, du soufre précipité ou du soufre obtenu par d'autres procédés chimiques, des polysulfures de sodium et de potassium et des composés de sulfures vieillis.